# EUROPEAN PATENT SPECIFICATION

(11) **EP 2 352 253 B1**
(45) Date of publication and mention of the grant of the patent: **13.12.2017**
(21) Application number: 09821553.6
(22) Date of filing: 21.09.2009
(51) Int. Cl.: H04L 12/437, H04L 12/26, H04L 12/42, H04L 12/703

(54) **METHOD AND APPARATUS FOR PROTECTING LINK AGGREGATION GROUP OF ETHERNET RING**
VERFAHREN UND VORRICHTUNG FÜR DEN SCHUTZ EINER VERBINDUNGSBÜNDELUNGSGRUPPE EINES ETHERNETRINGS
PROCÉDÉ ET APPAREIL DESTINÉS À PROTÉGER UN GROUPE D'AGRÉGATION DE LIAISONS D'UN RÉSEAU EN ANNEAU ETHERNET

(30) Priority: 21.10.2008 CN 200810169488
(43) Date of publication of application: 03.08.2011
(73) Proprietor: ZTE Corporation, Shenzhen, Guangdong 518057 (CN)
(72) Inventor: SHEN, Shuhua, Guangdong 518057 (CN); WU, Shaoyong, Guangdong 518057 (CN); XU, Hai, Guangdong 518057 (CN)
(74) Representative: Novagraaf Technologies
(86) International application number: PCT/CN2009/074056
(87) International publication number: WO 2010/045832

(56) References cited:
- CN-A- 1 997 034
- CN-A- 1 997 034
- CN-A- 101 212 455
- CN-A- 101 227 371
- CN-A- 101 227 371
- CN-A- 101 378 359
- CN-A- 101 378 359
- CN-A- 101 399 737
- US-A1- 2002 075 834
- LUCY YONG HUAWEI TECHNOLOGIES CHINA: "PTN Availability Enhancement Technique and Composite Transport Group", ITU-T DRAFTS ; STUDY PERIOD 2005-2008, INTERNATIONAL TELECOMMUNICATION UNION, GENEVA ; CH, vol. Study Group 15 ; 12/15, 9/15, 1 May 2007 (2007-05-01), pages 1-8, XP017527723, [retrieved on 2007-05-23]
- FAQS ORG: "RFC 3619 - Extreme Network's Ethernet Automatic Protection Switching (EAPS) Version 1", INTERNET CITATION, October 2003 (2003-10), XP002449412, Retrieved from the Internet: URL:http://www.faqs.org/rfcs/rfc3619.html [retrieved on 2007-09-03]
- AIBO LIU, YUEMING LU, YUEFENG JI: "FAST TOPOLOGY CONVERGENCE FOR HIERARCHICAL ROUTING IN AUTOMATICALLYSWITCHED OPTICAL NETWORK (ASON)", SPIE, PO BOX 10 BELLINGHAM WA 98227-0010 USA, vol. 5282, 31 December 2003 (2003-12-31), XP040253958, Proceedings of SPIE

## Description

### Field of the Invention

The present invention relates to communication field, and more particularly, to a method and an apparatus for protecting a link aggregation group of an Ethernet ring. Article: LUCY YONG HUAWEI TECHNOLOGIES CHINA: "PTN Availability Enhancement Technique and Composite Transport Group", ITU-T DRAFTS; STUDY PERIOD 2005-2008, INTERNSTIONAL TELECOMMUNICATION UNION GENEVA; CH, vol. Study Group 15; AIBO LIU, YUEMING LU, YUEFENG JI: "FAST TOPOLOGY CONVERGENCE FOR HIERARCHICAL ROUTING IN AUTOMATICALL YSWITCHED OPTICAL NETWORK (ASON)", SPIE, PO BOX 10 BELLINGHAM WA 98227-1100 USA, vol. 5282, 31 December 2003 (2003-12-31), XP040253958, Proceedings of SPIE; CN 1997034A discloses a method and system for protecting a link aggregation group; CN 101227371 A discloses a method and apparatus for copying and switching between peering switch devices.

### Background of the Invention

An Ethernet ring protection system in the RFC3619 comprises multiple nodes which connect with each other to constitute a ring. Multiple domains can be defined in the ring, that is, Ethernet ring protection domains.

One Ethernet ring protection domain can comprise one master node and several transit nodes, as well as a group of protected service VLANs (Virtual Local Area Network) which are configured to forward user data. In the above, two ports of the master node in the ring are respectively defined as a master port and a slave port, and the protected service VLANs are defined as protection service VLANs. When the link in the ring is up, the master node blocks forwarding function of the protection service VLAN of the slave port, so that there is no loop generated in the ring, and a "broadcast storm" incurred by a network loop is prevented. When the link in the ring is down, the master node releases the forwarding function of the protection service VLAN of the slave port, so that user data can be transmitted by the slave port of the master node, which ensures the connection of services. An Ethernet ring protection and control message is a communication and control message between the nodes in the domains, wherein when the nodes block the ports, the Ethernet ring protection and control message will not be affected and can still pass. When the Ethernet ring protection system is in normal operation, each node in the ring records a current ring network state as Up or Down.

When the service flow for forwarding the user data exceeds a bandwidth, it is required to run an LACP (Link Aggregation Control Protocol) in the Ethernet ring, so as to increase the bandwidth.

Link aggregation refers to physical link segments having the same transmission medium type and the same transmission rate as "binding" together, and logically appears to be one link. It allows peer to peer physical links between switches or between a switch and a server to multiply bandwidths at the same time. The link aggregation technology can realize that different ports partake network flows, and the different ports can serve as backups for one another, thereby ensuring the redundancy of the link.

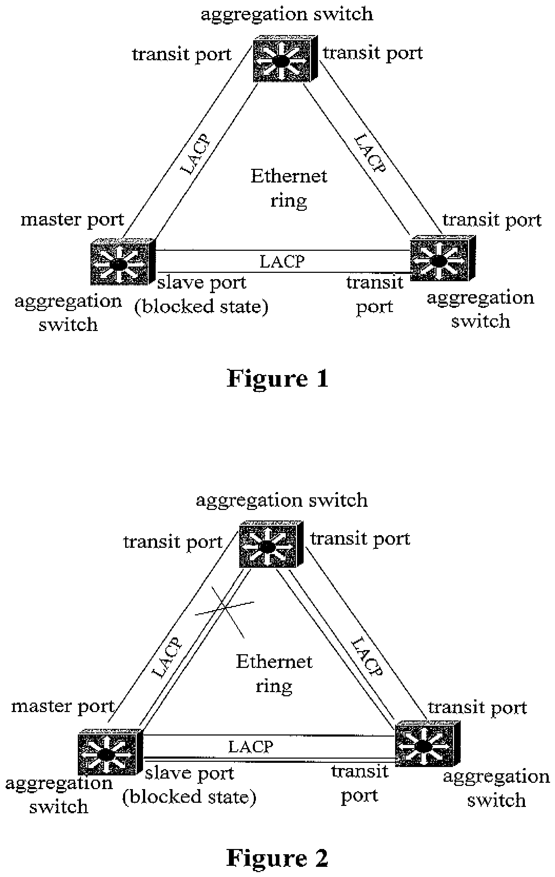

Figure 1 is a topological diagram of an Ethernet ring automatic protection system with LACP which is in normal operation. The Ethernet ring automatic protection system consists of nodes S1, S2 and S3, and one Ethernet ring protection domain is configured in the ring formed by the three nodes, wherein the master node in the domain is S2, the remaining nodes S1 and S3 are transit nodes, and the LACP is used in the overall ring. Two ports in the ring of the master node S2 are respectively a master port (P) and a slave port (S). In addition, the protection service VLAN is defined in the domain, and each port in the ring is configured in the protection service VLAN. When the link in the ring is up, the master node S2 blocks the data forwarding function of the protection service VLAN of the slave port, so as to prevent a "broadcast storm" incurred by a loop in the network; when the link is down, the master node S2 releases the data forwarding function of the protection service VLAN of the slave port, so as to make data in the service VLAN re-connect.

The master node periodically sends to the master port a ring network link health detection message (HELLO message). When the link in the ring is up, the HELLO message sequentially passes through each of the transit nodes and reaches the slave port of the master node. The HELLO message can pass through the slave port blocked by the master node and be received by the master node. If the master node can not receive a HELLO frame within a specified period, it is deemed that the link in the ring is down.

As shown in Figure 2, when a physical link in a primary link is down, the HELLO message can still pass through the slave port blocked by the master node and be received by the master node. The system does not deem that the overall link is down until all links in the aggregation group are down, then releases the forwarding function of the protection service VLAN of the slave port, updates an MAC address table of the ports in the ring, and sends a ring network failure notification message (FLUSH-DOWN) to notify the other nodes in the ring to perform link failure switching. Actually, in this process, when a second physical link is disconnected, this has resulted in that the bandwidth provided by the ring can not meet users' bandwidth requirement, so as to affect users' services. For example, in the case that a user expect a bandwidth of 2 gigabits and the ring uses 3 links with 1 gigabit bandwidth to perform link aggregation, when there are 2 links in the aggregation group fail at present, the remaining one link can only provide a bandwidth of 1 gigabit, and this obviously can not meet the user's requirements.

Hence, when a part of the links in the link aggregation group is down, failing to provide a reliable bandwidth service to users is possible. Currently, effective solutions have not been put forward for the problem that the reliable bandwidth service can not be provided to users when some links in the link aggregation group fail.

### Summary of the Invention

The purpose of the present invention is to provide a method and an apparatus for protecting a link aggregation group of an Ethernet ring, so as to solve the problem that the reliable bandwidth service can not be provided to users when some links in the link aggregation group fail.

According to one aspect of the present invention, a method for protecting a link aggregation group of an Ethernet ring is provided.

The method for protecting a link aggregation group according to an embodiment of the present invention comprises: detecting states of physical links in a link aggregation group; and comparing current bandwidth of the link aggregation group with a switch threshold which can meet practical service requirements in the case that the state of a physical link in the link aggregation group is down, and performing subsequent processing according to the comparison result.

Preferably, the step of comparing the current bandwidth of the link aggregation group with the switch threshold and performing subsequent processing according to the comparison result particularly comprises: comparing the current bandwidth with the switch threshold, using the link aggregation group to provide services continuatively in the case that the current bandwidth is greater than or equal to the switch threshold; and releasing a salve port of a primary link in the case that the current bandwidth is smaller than the switch threshold and the physical link in the link aggregation group which is down is in the primary link.

Preferably, in the case that it is judged that the current bandwidth is smaller than the switch threshold when comparing the current bandwidth with the switch threshold, before the step of releasing the slave port of the primary link, the method further comprises: judging whether the physical link which is down is in the primary link.

Preferably, after the step of releasing the slave port of the primary link, the method further comprises: comparing a bandwidth that can be provided by the link aggregation group with the switch threshold; and blocking the slave port of the primary link, if the physical link recovered to be an up state is determined to be in the primary link after a preset time period, in the case that the bandwidth that can be provided by the link aggregation group is greater than or equal to the switch threshold.

Preferably, after the step of releasing the slave port of the primary link and before the step of blocking the slave port of the primary link when the bandwidth that can be provided by the link aggregation group is greater than or equal to the switch threshold, the method further comprises: judging whether the physical link which recovers to be the up state is in the primary link.

According to another aspect of the present invention, an apparatus for protecting a link aggregation group of an Ethernet ring is also provided.

The apparatus for protecting a link aggregation group according to the present invention comprises: a detecting module, configured to detect states of physical links in a link aggregation group; a first comparing module, configured to compare current bandwidth of the link aggregation group with a switch threshold which can meet practical service requirements in the case that the detecting module detects that the state of a physical link in the link aggregation group is down; and a processing module, configured to perform subsequent processing according to the comparison result of the first comparing module.

Preferably, the processing module particularly comprises: a first processing module, configured to use the link aggregation group to provide services continuatively in the case that the comparison result of the first comparing module is that the current bandwidth is greater than or equal to the switch threshold.

Preferably, the processing module further comprises: a first determining module, configured to determine whether the physical link in the link aggregation group which is down is in the primary link in the case that the comparison result of the first comparing module is that the current bandwidth is smaller than the switch threshold; and a second processing module, configured to release a slave port of the primary link in the case that the first determining module determines that the physical link in the link aggregation group which is down is in the primary link.

Preferably, the apparatus further comprises: a second comparing module, configured to compare a bandwidth that can be provided by the link aggregation group with the switch threshold after the slave port of the primary link is released.

Preferably, the processing module further comprises: a second determining module, configured to determine whether the physical link recovered to be an up state is in the primary link after a preset time period in the case that the comparison result of the second comparing module is that the bandwidth that can be provided by the link aggregation group is greater than or equal to the switch threshold; and a third processing module, configured to block the slave port of the primary link in the case that the second determining module determines that the bandwidth that can be provided by the link aggregation group is greater than or equal to the switch threshold.

By releasing the slave port of the aggregation link, which is down, of the primary link, the above technical solutions of the present invention enable the bandwidth provided by the Ethernet ring to meet users' bandwidth requirement.

### Brief Description of the Drawings

The accompanying drawings herein are intended to provide further understanding of the present invention and constitute a part of the present application. The schematic embodiments of the present invention and the description thereof are used to explain the present invention and do not constitute improper restrictions on the same. In the accompanying drawings:
Figure 1 is a topological diagram of an Ethernet ring automatic protection system using a link aggregation protocol according to the related art;
Figure 2 is a topological diagram of a link in an aggregation link group which can not meet band requirement according to the related art;
Figure 3 is a flow chart of a method for protecting a link aggregation group according to a method embodiment of the present invention;
Figure 4 is a flow chart of a process example of a method for protecting a link aggregation group according to a method embodiment of the present invention;
Figure 5 is a flow chart of another process example of a method for protecting a link aggregation group according to a method embodiment of the present invention;
Figure 6 is a block diagram of an apparatus for protecting a link aggregation group according to an apparatus embodiment of the present invention; and
Figure 7 is a block diagram of a preferred structure of an apparatus for protecting a link aggregation group according to an apparatus embodiment of the present invention.

### Detailed Description of the Embodiments

Preferred embodiments of the present invention will be described hereinafter taken in conjunction with the accompanying drawings. It should be understood that the preferred embodiments described herein are only intended to describe and explain the present invention and are not used to limit the present invention.

### Functional Summary

The main idea of the present invention is as follows: when a physical link in the link aggregation group is down, the bandwidth of physical links in the aggregation link which are in an up state can not meet the users' practical service requirements, and the physical link that is down is in the primary link, then a slave port of the primary link is released so that data in the service VLAN is reconnected, thereby ensuring that the bandwidth provided by the Ethernet ring can meet users' bandwidth requirements.

### Method Embodiments

According to an embodiment of the present invention, a method for protecting a link aggregation group of an Ethernet ring is provided.

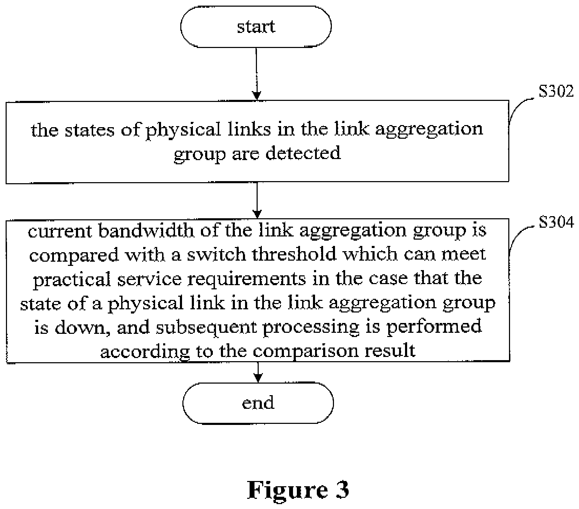

Figure 3 is a flow chart of the method for protecting the link aggregation group according to the embodiment of the present invention. As shown in Figure 3, the method comprises the following processes.

Step S302, the states of physical links in the link aggregation group are detected.

Step S304, the current bandwidth of the link aggregation group is compared with a switch threshold which can meet practical service requirements in the case that the state of a physical link in the link aggregation group is down, and subsequent processing is performed according to the comparison result.

Detailed description will be described hereinafter.

### 1. Step S302

The link aggregation group for transmitting services in the Ethernet ring is scanned periodically, and the states of the physical links in the link aggregation group are detected, wherein, the states of the physical links are Down and Up.

### 2. Step S304

When it is detected that a physical link in the link aggregation group is down, the current bandwidth of the link aggregation group is compared with the switch threshold. According to the comparison result, there are two different processes as following:
(1) in the case that the current bandwidth is greater than or equal to the switch threshold, the link aggregation group is continuatively used to provide services; and
(2) in the case that the current bandwidth is smaller than the switch threshold, it is continuatively judged whether the physical links in the link aggregation group which are down are in a primary link, and a salve port of the primary link is released to perform link switch when the result of the judging is affirmative.

Before the above processes, the switch threshold requires to be preset and is set according to practical service requirements.

According to the above processes, the bandwidth provided by the Ethernet ring can meet users' bandwidth requirements by releasing the slave port of the aggregation link in the primary link which is down.

Preferably, after the above processes, following operations can be further performed: comparing the bandwidth that can be provided by the link aggregation group with the switch threshold; in the case that the bandwidth that can be provided by the link aggregation group is greater than or equal to the switch threshold, judging whether the physical link recovered to be the up state is in the primary link; and blocking the slave port of the primary link if it is confirmed that the aggregation link which recovers to be the up state after a preset time period is in the primary link.

After the above operations, the Ethernet ring recovers an initial state and ensures the completeness of the process flow of the method of the present invention.

The technical solution of the present invention will be further described in detail in conjunction with examples.

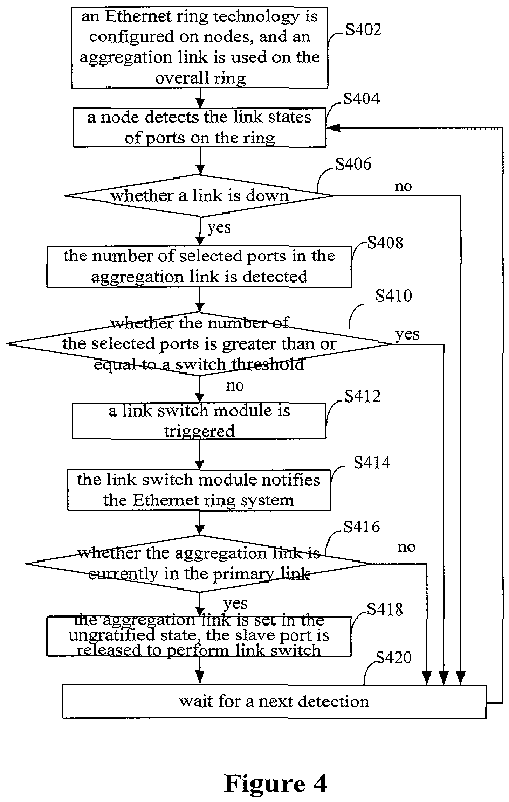

Figure 4 is a flow chart of a failure process when a link failure occurs in the aggregation link group according to the method embodiment of the present invention. As shown in Figure 4, the process flow comprises the following steps.

Step S402, an Ethernet ring technology is configured on nodes, and the LACP (Link Aggregation Control Protocol) is used in the overall ring.

Step S404, a master node detects link states of two ports in the ring.

Step S406, it is judged whether the links connected with the ports in the ring are down, wherein if the links connected with the ports are not down, no processing but step S420 is executed, otherwise step S408 is executed.

Step S408, link detection is performed to detect the number of selected (a state of successful aggregation) ports in the aggregation link.

Step S410, it is judged whether the number of the selected ports in the aggregation link is greater than or equal to a switch threshold which is preset, wherein if that is affirmative, no processing but step S420 is executed, otherwise step S412 is executed.

Step S412, the aggregation link that can not meet requirements is set ungratified (an unsatisfactory state) (all ports in the ungratified state can not receive and send data messages), and a link switch module is triggered.

Step S414, the link switch module sends a message to notify the Ethernet ring system.

Step S416, the Ethernet ring system judges the state of the aggregation link in the system, wherein if the aggregation link is currently in the primary link, step S418 is executed, otherwise step S420 is executed.

Step S418, the aggregation link is set in the ungratified state, the slave port of the primary link is released to perform link switch, and a warning is issued.

Step S420, wait for a next monitoring and return to step S404.

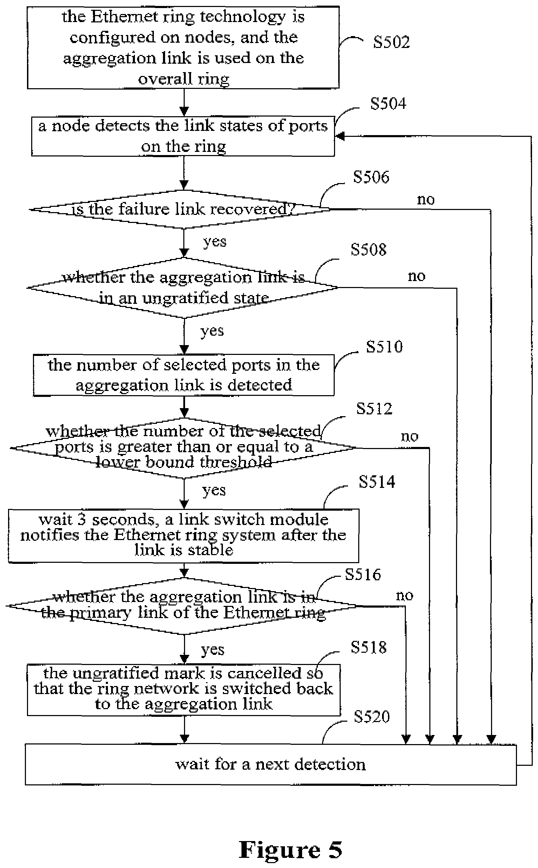

Figure 5 is a process flow chart of that a link in the link aggregation group which is down recovers to be normal state according to a method embodiment of the present invention. As shown in Figure 5, the process comprises following steps.

Step S502, the Ethernet ring technology is configured on nodes, and the LACP is used in the overall ring.

Step S504, a master node detects link states of two ports in the ring.

Step S506, it is judged whether there is a failure port is recovered in the ring, wherein if there is no port is recovered, no processing but step S520 is executed, otherwise step S508 is executed.

Step S508, it is judged whether the link is in the ungratified state, wherein if the link is in the ungratified state, step S510 is executed, otherwise step S520 is executed.

Step S510, a link detecting module is triggered to detect the number of selected ports in the aggregation link.

Step S512, it is judged whether the number of the selected ports in the aggregation link is greater than or equal to a switch threshold which is preset, wherein if that is negative, no processing but step S520 is executed, otherwise step S514 is executed.

Step S514, the ungratified state of the aggregation link is cancelled, a warning is issued, and a link switch module notifies the Ethernet ring system after waiting for a time period and the link is stable.

Step S516, the Ethernet ring system judges the state of the aggregation link in the system, wherein if the aggregation link is in the primary link of the ring network, step S518 is executed, otherwise step S520 is executed.

Step S518, the slave port of the primary link is blocked so that the ring network is switched back to the link.

Step S520, waits for a next trigger and returns to step S504.

By the above embodiments of the present invention, the process flow of that link failure occurs in the link aggregation group and the process flow of that the link which is down in the link aggregation group recovers to be normal state are respectively described.

### Apparatus Embodiments

According to an embodiment of the present invention, an apparatus for protecting a link aggregation group of an Ethernet ring is also provided.

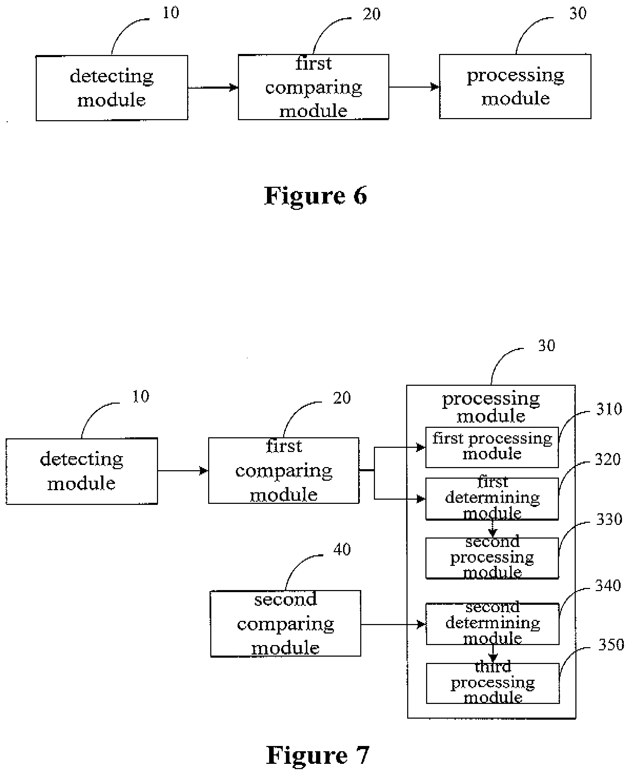

Figure 6 is a block diagram of the apparatus for protecting the link aggregation group according to an apparatus embodiment of the present invention. As shown in Figure 6, the apparatus comprises: a detecting module 10, a first comparing module 20 and a processing module 30.

Specifically, the detecting module 10 is configured to detect the states of physical links in the link aggregation group.

The first comparing module 20 is connected to the detecting module 10 and configured to compare current bandwidth of the link aggregation group with a switch threshold which can meet practical service requirements in the case that the detecting module detects that the state of a physical link in the link aggregation group is down.

The processing module 30 is connected to the first comparing module 20 and configured to perform subsequent processing according to the comparison result of the first comparing module 20.

Figure 7 is a block diagram of a preferred structure of the apparatus for protecting the link aggregation group according to an apparatus embodiment of the present invention. As shown in Figure 7, the processing module 30 specifically comprises:
a first processing module 310 which is configured to use the link aggregation group to provide services continuatively in the case that the comparison result of the first comparing module 20 is that the current bandwidth is greater than or equal to the switch threshold;
a first determining module 320 which is configured to determine whether the physical link in the link aggregation group which is down is in the primary link in the case that the comparison result of the first comparing module 20 is that the current bandwidth is smaller than the switch threshold; and
a second processing module 330 which is connected to the first determining module 320 and configured to release a slave port of the primary link in the case that the first determining module 320 determines that the physical link in the link aggregation group which is down is in the primary link.

In addition, the apparatus can further comprise: a second comparing module 40 which is configured to compare a bandwidth that can be provided by the link aggregation group with the switch threshold after the slave port of the primary link is released.

Also, the processing module 30 further comprises: a second determining module 340 which is connected to the second comparing module 40 and configured to determine whether the aggregation link recovered to be an up state is in the primary link after a preset time period in the case that the comparison result of the second comparing module 40 is that the bandwidth that can be provided by the link aggregation group is greater than or equal to the switch threshold; and a third processing module 350 which is connected to the second determining module 340 and configured to block the slave port of the primary link in the case that the second determining module determines that the bandwidth that can be provided by the link aggregation group is greater than or equal to the switch threshold.

During specific implementation, the first comparing module and the second comparing module, the first determining module and the second determining module, the first processing module, the second processing module and the third processing module can all be configured as one, which is not described in detail herein.

In conclusion, in virtue of the above technical solutions of the present invention, by releasing the slave port of the aggregation link in the primary link which is down, the bandwidth provided by the Ethernet ring can meet users' bandwidth requirement, thereby improving users' experiences.

Obviously, the person skilled in the art should understand that various modules and steps of the present invention described above can be realized with general computing devices and can be integrated into one single computing device or distributed within a network consisting of multiple computing devices. Alternatively, the various modules and steps described above can be realized with the program codes executable by the computing devices. Thus, the various modules and steps described above can be stored in memory devices so as to be executed by the computing devices, or can be formed into individual integrated circuit modules, or a plurality of the modules or steps can be formed into a single integrated circuit module so as to be realized. Therefore, the present invention is not limited to any particular hardware or software combination.

Described above are just preferred embodiments of the present invention and are not intended to restrict the present invention. For those skilled in the art, the present invention may have various changes and variations. Any modifications, equivalent substitutions, improvements and etc. within the scope of the present invention as defined in the claims shall all be included in the scope of protection of the present invention.

## Claims

1. A method for protecting a link aggregation group of an Ethernet ring, comprising:
detecting states of physical links in a link aggregation group (S302); and
comparing current bandwidth of the link aggregation group with a switch threshold which can meet practical service requirements in the case that the state of a physical link in the link aggregation group is down, and performing subsequent processing according to the comparison result (S304);
**characterized in that**
the step of comparing the current bandwidth of the link aggregation group with the switch threshold and performing subsequent processing according to the comparison result comprises: comparing the current bandwidth with the switch threshold, using the link aggregation group to provide services continuatively in the case that the current bandwidth is greater than or equal to the switch threshold; and unblocking a slave port of a master node in the case that the current bandwidth is smaller than the switch threshold and the physical link in the link aggregation group which is down is in the primary link, wherein two ports of the master node in the Ethernet ring are respectively a master port which connects to the primary link, and the slave port.

2. The method according to claim 1, **characterized in that**, in the case that it is judged that the current bandwidth is smaller than the switch threshold when comparing the current bandwidth with the switch threshold, before the step of unblocking the slave port of the master node, the method further comprises:
judging whether the physical link which is down is in the primary link.

3. The method according to claim 1, **characterized in that**, after the step of unblocking the slave port of the master node, the method further comprises:
comparing a bandwidth that can be provided by the link aggregation group with the switch threshold; and
blocking the slave port of the master node, if the physical link recovered to be in an up state is determined to be in the primary link after a preset time period, in the case that the bandwidth that can be provided by the link aggregation group is greater than or equal to the switch threshold.

4. The method according to claim 3, **characterized in that**, after the step of unblocking the slave port of the master node and before the step of blocking the slave port of the master node when the bandwidth that can be provided by the link aggregation group is greater than or equal to the switch threshold, the method further comprises:
judging whether the physical link which recovers to be in the up state is in the primary link.

5. An apparatus for protecting a link aggregation group of an Ethernet ring, **characterized by** comprising:
a detecting module (10), configured to detect states of physical links in a link aggregation group;
a first comparing module (20), configured to compare current bandwidth of the link aggregation group with a switch threshold which can meet practical service requirements in the case that the detecting module detects that the state of a physical link in the link aggregation group is down; and
a processing module (30), configured to perform subsequent processing according to the comparison result of the first comparing module;
wherein the processing module comprises: a first processing module (310), configured to use the link aggregation group to provide services continuatively in the case that the comparison result of the first comparing module is that the current bandwidth is greater than or equal to the switch threshold; a first determining module (320), configured to determine whether the physical link in the link aggregation group which is down is in the primary link in the case that the comparison result of the first comparing module is that the current bandwidth is smaller than the switch threshold; and a second processing module (330), configured to unblock a slave port of the master node in the case that the first determining module determines that the physical link in the link aggregation group which is down is in the primary link, wherein two ports of the master node in the Ethernet ring are respectively a master port which connects to the primary link, and the slave port.

6. The apparatus according to claim 5, **characterized in that** the apparatus further comprises:
a second comparing module (40), configured to compare a bandwidth that can be provided by the link aggregation group with the switch threshold after the slave port of the master node is unblocked.

7. The apparatus according to claim 6, **characterized in that** the processing module further comprises:
a second determining module (340), configured to determine whether the physical link recovered to be in an up state is in the primary link after a preset time period in the case that the comparison result of the second comparing module is that the bandwidth that can be provided by the link aggregation group is greater than or equal to the switch threshold; and
a third processing module (350), configured to block the slave port of the master node in the case that the second determining module determines that the bandwidth that can be provided by the link aggregation group is greater than or equal to the switch threshold.

## Patentansprüche

1. Verfahren zum Schützen einer Link Aggregation Group eines Ethernet-Rings, umfassend:
Erkennen von Zuständen von physikalischen Verbindungen in einer Link Aggregation Group (S302); und
Vergleichen der aktuellen Bandbreite der Link Aggregation Group mit einem Umschaltschwellenwert, der praktische Dienstanforderungen erfüllen kann in dem Fall, dass der Zustand einer physikalischen Verbindung in der Link Aggregation Group ausgefallen ist, und Durchführen von anschließender Verarbeitung gemäß dem Vergleichsergebnis (S304);
**dadurch gekennzeichnet, dass**
der Schritt des Vergleichens der aktuellen Bandbreite der Link Aggregation Group mit dem Umschaltschwellenwert und Durchführens von anschließender Verarbeitung gemäß dem Vergleichsergebnis umfasst: Vergleichen der aktuellen Bandbreite mit dem Umschaltschwellenwert, Verwenden der Link Aggregation Group, um Dienste kontinuierlich bereitzustellen in dem Fall, dass die aktuelle Bandbreite größer als oder gleich dem Umschaltschwellenwert ist; und Freigeben eines Slave-Ports eines Master-Knotens in dem Fall, dass die aktuelle Bandbreite kleiner ist als der Umschaltschwellenwert und sich die physikalische Verbindung in der Link Aggregation Group, die ausgefallen ist, in der primären Verbindung befindet, wobei zwei Ports des Master-Knotens in dem Ethernet-Ring jeweils ein Master-Port, der mit der primären Verbindung verbindet, und der Slave-Port sind.

2. Verfahren gemäß Anspruch 1, **dadurch gekennzeichnet, dass** in dem Fall, dass beim Vergleichen der aktuellen Bandbreite mit dem Umschaltschwellenwert festgestellt wird, dass die aktuelle Bandbreite kleiner ist als der Umschaltschwellenwert, das Verfahren vor dem Schritt des Freigebens des Slave-Ports des Master-Knotens weiter umfasst:
Feststellen, ob sich die physikalische Verbindung, die ausgefallen ist, in der primären Verbindung befindet.

3. Verfahren gemäß Anspruch 1, **dadurch gekennzeichnet, dass** das Verfahren nach dem Schritt des Freigebens des Slave-Ports des Master-Knotens weiter umfasst:
Vergleichen einer Bandbreite, die durch die Link Aggregation Group bereitgestellt werden kann, mit dem Umschaltschwellenwert; und
Sperren des Slave-Ports des Master-Knotens, wenn bestimmt wird, dass sich die physikalische Verbindung, die so wiederhergestellt wurde, dass sie sich in einem laufenden Zustand befindet, nach einem voreingestellten Zeitraum in der primären Verbindung befindet, in dem Fall, dass die Bandbreite, die durch die Link Aggregation Group bereitgestellt werden kann, größer als oder gleich dem Umschaltschwellenwert ist.

4. Verfahren gemäß Anspruch 3, **dadurch gekennzeichnet, dass** nach dem Schritt des Freigebens des Slave-Ports des Master-Knotens und vor dem Schritt des Sperrens des Slave-Ports des Master-Knotens, wenn die Bandbreite, die durch die Link Aggregation Group bereitgestellt werden kann, größer als oder gleich dem Umschaltschwellenwert ist, das Verfahren weiter umfasst:
Feststellen, ob sich die physikalische Verbindung, die so wiederhergestellt wird, dass sie sich im laufenden Zustand befindet, in der primären Verbindung befindet.

5. Vorrichtung zum Schützen einer Link Aggregation Group eines Ethernet-Rings, **dadurch gekennzeichnet, dass** sie umfasst:
ein Erkennungsmodul (10), das dazu eingerichtet ist, Zustände von physikalischen Verbindungen in einer Link Aggregation Group zu erkennen;
ein erstes Vergleichsmodul (20), das dazu eingerichtet ist, die aktuelle Bandbreite der Link Aggregation Group mit einem Umschaltschwellenwert zu vergleichen, der praktische Dienstanforderungen erfüllen kann in dem Fall, dass das Erkennungsmodul erkennt, dass der Zustand einer physikalischen Verbindung in der Link Aggregation Group ausgefallen ist; und
ein Verarbeitungsmodul (30), das dazu eingerichtet ist, anschließende Verarbeitung gemäß dem Vergleichsergebnis des ersten Vergleichsmoduls durchzuführen,
wobei das Verarbeitungsmodul umfasst: ein erstes Verarbeitungsmodul (310), das dazu eingerichtet ist, die Link Aggregation Group zu verwenden, um Dienste kontinuierlich bereitzustellen in dem Fall, dass das Vergleichsergebnis des ersten Vergleichsmoduls lautet, dass die aktuelle Bandbreite größer als oder gleich dem Umschaltschwellenwert ist; ein erstes Bestimmungsmodul (320), das dazu eingerichtet ist, zu bestimmen, ob sich die physikalische Verbindung in der Link Aggregation Group, die ausgefallen ist, in der primären Verbindung befindet in dem Fall, dass das Vergleichsergebnis des ersten Vergleichsmoduls lautet, dass die aktuelle Bandbreite kleiner ist als der Umschaltschwellenwert; und ein zweites Verarbeitungsmodul (330), das dazu eingerichtet ist, einen Slave-Port des Master-Knotens freizugeben in dem Fall, dass das erste Bestimmungsmodul bestimmt, dass sich die physikalische Verbindung in der Link Aggregation Group, die ausgefallen ist, in der primären Verbindung befindet, wobei zwei Ports des Master-Knotens in dem Ethernet-Ring jeweils ein Master-Port, der mit der primären Verbindung verbindet, und der Slave-Port sind.

6. Vorrichtung gemäß Anspruch 5, **dadurch gekennzeichnet, dass** die Vorrichtung weiter umfasst:
ein zweites Vergleichsmodul (40), das dazu eingerichtet ist, eine Bandbreite, die durch die Link Aggregation Group bereitgestellt werden kann, mit dem Umschaltschwellenwert zu vergleichen, nachdem der Slave-Port des Master-Knotens freigegeben wurde.

7. Vorrichtung gemäß Anspruch 6, **dadurch gekennzeichnet, dass** das Verarbeitungsmodul weiter umfasst:
ein zweites Bestimmungsmodul (340) das dazu eingerichtet ist, zu bestimmen, ob sich die physikalische Verbindung, die so wiederhergestellt wurde, dass sie sich in einem laufenden Zustand befindet, nach einem voreingestellten Zeitraum in der primären Verbindung befindet in dem Fall, dass das Vergleichsergebnis des zweiten Vergleichsmoduls lautet, dass die Bandbreite, die durch die Link Aggregation Group bereitgestellt werden kann, größer als oder gleich dem Umschaltschwellenwert ist; und
ein drittes Verarbeitungsmodul (350), das dazu eingerichtet ist, den Slave-Port des Master-Knotens zu sperren in dem Fall, dass das zweite Bestimmungsmodul bestimmt, dass die Bandbreite, die durch die Link Aggregation Group bereitgestellt werden kann, größer als oder gleich dem Umschaltschwellenwert ist.

## Revendications

1. Procédé de protection d'un groupe d'agrégation de liaisons d'un réseau en anneau Ethernet, comprenant :
la détection d'états de liaisons physiques dans un groupe d'agrégation de liaisons (S302) ; et
la comparaison d'une largeur de bande actuelle du groupe d'agrégation de liaisons à un seuil de commutation qui peut satisfaire des exigences de service pratiques dans le cas où l'état d'une liaison physique dans le groupe d'agrégation de liaisons est défectueux, et la réalisation d'un traitement subséquent selon le résultat de la comparaison (S304) ;
**caractérisé en ce que**
l'étape de comparaison de la largeur de bande actuelle du groupe d'agrégation de liaisons au seuil de commutation et de réalisation du traitement subséquent selon le résultat de la comparaison comprend : la comparaison de la largeur de bande actuelle avec le seuil de commutation, à l'aide du groupe d'agrégation de liaisons pour fournir de manière continuative des services dans le cas où la largeur de bande actuelle est supérieure ou égale au seuil de commutation ; et le déblocage d'un port esclave d'un noeud maître dans le cas où la largeur de bande actuelle est inférieure au seuil de commutation et que la liaison physique dans le groupe d'agrégation de liaisons qui est défectueuse est dans la liaison primaire, dans lequel deux ports du noeud maître dans le réseau en anneau Ethernet sont respectivement un port maître qui se connecte à la liaison primaire, et le port esclave.

2. Procédé selon la revendication 1, **caractérisé en ce que**, dans le cas où il est jugé que la largeur de bande actuelle est inférieure au seuil de commutation lors de la comparaison de la largeur de bande actuelle au seuil de commutation, avant l'étape de déblocage du port esclave du noeud maître, le procédé comprend en outre :
le fait de juger si la liaison physique qui est défectueuse est dans la liaison primaire.

3. Procédé selon la revendication 1, **caractérisé en ce que**, après l'étape de déblocage du port esclave du noeud maître, le procédé comprend en outre :
la comparaison d'une largeur de bande, qui peut être fournie par le groupe d'agrégation de liaisons, au seuil de commutation ; et
le blocage du port esclave du noeud maître, s'il est déterminé que la liaison physique rétablie pour être dans un état en ordre est dans la liaison primaire après une période de temps prédéfinie, dans le cas où la largeur de bande qui peut être fournie par le groupe d'agrégation de liaisons est supérieure ou égale au seuil de commutation.

4. Procédé selon la revendication 3, **caractérisé en ce que**, après l'étape de déblocage du port esclave du noeud maître et avant l'étape de blocage du port esclave du noeud maître lorsque la largeur de bande qui peut être fournie par le groupe d'agrégation de liaisons est supérieure ou égale au seuil de commutation, le procédé comprend en outre :
le fait de juger si la liaison physique qui se rétablit pour être dans l'état en ordre est dans la liaison primaire.

5. Appareil de protection d'un groupe d'agrégation de liaisons d'un réseau en anneau Ethernet, **caractérisé en ce qu'**il comprend :
un module de détection (10), configuré pour détecter des états de liaisons physiques dans un groupe d'agrégation de liaisons ;
un premier module de comparaison (20), configuré pour comparer une largeur de bande actuelle du groupe d'agrégation de liaisons à un seuil de commutation qui peut satisfaire des exigences de service pratiques dans le cas où le module de détection détecte que l'état d'une liaison physique dans le groupe d'agrégation de liaisons est défectueux ; et
un module de traitement (30), configuré pour réaliser un traitement subséquent selon le résultat de la comparaison du premier module de comparaison ;
dans lequel le module de traitement comprend : un premier module de traitement (310), configuré pour utiliser le groupe d'agrégation de liaisons pour fournir de manière continuative des services dans le cas où le résultat de la comparaison du premier module de comparaison est que la largeur de bande actuelle est supérieure ou égale au seuil de commutation ; un premier module de détermination (320), configuré pour déterminer si la liaison physique dans le groupe d'agrégation de liaisons qui est défectueuse est dans la liaison primaire dans le cas où le résultat de la comparaison du premier module de comparaison est que la largeur de bande actuelle est inférieure au seuil de commutation ; et un deuxième module de traitement (330), configuré pour débloquer un port esclave du noeud maître dans le cas où le premier module de détermination détermine que la liaison physique dans le groupe d'agrégation de liaisons qui est défectueuse est dans la liaison primaire, dans lequel deux ports du noeud maître dans le réseau en anneau Ethernet sont respectivement un port maître qui se connecte à la liaison primaire et le port esclave.

6. Appareil selon la revendication 5, **caractérisé en ce que** l'appareil comprend en outre :
un second module de comparaison (40), configuré pour comparer une largeur de bande, qui peut être fournie par le groupe d'agrégation de liaisons, au seuil de commutation après que le port esclave du noeud maître est débloqué.

7. Appareil selon la revendication 6, **caractérisé en ce que** le module de traitement comprend en outre :
un second module de détermination (340), configuré pour déterminer si la liaison physique rétablie pour être dans un état en ordre est dans la liaison primaire après une période de temps prédéfinie dans le cas où le résultat de la comparaison du second module de comparaison est que la largeur de bande qui peut être fournie par le groupe d'agrégation de liaisons est supérieure ou égale au seuil de commutation ; et
un troisième module de traitement (350), configuré pour bloquer le port esclave du noeud maître dans le cas où le second module de détermination détermine que la largeur de bande qui peut être fournie par le groupe d'agrégation de liaisons est supérieure ou égale au seuil de commutation.
